# EUROPEAN PATENT APPLICATION

(11) **EP 2 537 642 A1**
(43) Date of publication of application: **26.12.2012**
(21) Application number: 12173306.7
(22) Date of filing: 22.06.2012
(51) Int. Cl.: B25J 9/00, B25J 9/16

(54) **Robot fabricator**

(30) Priority: 23.06.2011 US 201161500300 P
(71) Applicant: Raytheon BBN Technologies Corp., Cambridge, MA 02138 (US); iRobot Corporation, Bedford, MA 01730 (US)
(72) Inventor: Mozeika, Annan Michael, Groton, MA Massachusetts 01450 (US); Adler, Aaron, Sharon, MA Massachusetts 02067 (US); Yaman-Sirin, Fusan, Arlington, MA Massachusetts 02474 (US); Beal, Jacob, Somerville, MA Massachusetts 02143 (US)
(74) Representative: Curran, Clair

(57) **Abstract**

A fabrication system includes a tool-head (106) for manufacturing, a first manipulator (102) and a second manipulator (104). The first manipulator (102) supports and manipulates an item (110), and is configured to provide six-axes of movement for positioning of the item (110) relative the tool-head (106). The second manipulator (104) carries a component and orients the component at a select orientation relative to the item (110) supported on the first manipulator (102). The tool-head (106) is configured to add material to at least one of the item (110) and the component. The first and second manipulators (102, 104) provide at least six axes of fabrication for the tool-head (106).

## Description

### Background

A portion of typical three-dimensional printing manufacturing processes are currently automated. However, most products are not manufactured by fully automated means. Human intervention and labor is almost always required. In traditional 3D printing, designs must still be divided into parts for production, and a trained individual assembles the fabricated parts into the final product after printing. A traditional 3D printing technology is discussed, for example, in U.S. Patent No. 7,939,003. In traditional 3D printing, a product is printed by depositing material on an item placed on a horizontal platform. Material is deposited layer by layer, building the part up from a base layer. An orientation for the object to be printed is determined before printing starts, and the orientation of the object remains constant until printing is completed - the orientation is not changed during fabrication. Traditional 3D printing creates an object from a base layer, moving upward, and does not allow material to be subsequently added to a previous layer or on a side of the object.

Additionally, in traditional 3D printing, material can only be deposited in areas in which there is already a base on which to deposit material. If the product to be printed requires an overhang, or becomes larger on a subsequent layer, a support structure is used to support the material that extends past the base on the previous plane. The support structure is removed after printing is complete, requiring extra processing and human involvement in the manufacturing steps. Human involvement in manufacturing steps increases production costs and creates increased factory safety risks. The cost of the support material also increases production costs.

Furthermore, in traditional 3D printing, connectors and fasteners are used to secure product components together, and seams are created when product components are fused together. Connectors, fasteners, seams, and similar interfaces are frequently a source of failure in the end product. A fabrication device that reduces the number of connectors, fasteners, seams, and similar component interfaces increases the quality of the end product and reduces product failure. Traditional 3D printers require significant effort to produce a product design, and may require human intervention to assemble a finished product. A device that can fabricate a finished product from a design without any expert help or intervention increases both efficiency and product production possibilities.

The systems and methods described herein decrease manufacturing costs, improve product quality, and improve factory safety by reducing the need for human labor during manufacture and more fully automating the manufacture and assembly processes.

### Summary

The systems and methods described herein include a fabrication machine/method that fuses additive and subtractive manufacturing with in-situ component placement to provide completely autonomous all-in-one product manufacturing. Product fabrication is centered around a six-axis industrial robotic manipulator (primary manipulator) that handles the product from seed component to mature product. The primary manipulator positions the product for manufacturing operations such as additive and subtractive manufacturing (3D printing, milling and drilling). A secondary manipulator handles component pick-and-place and secondary manufacturing operations such as wire placement and hardware testing. According to one feature, all-in-one product manufacturing increases the ability to produce prototypes or small production runs of devices, since no human intervention is used, product design is simpler and production is more efficient.

Optionally, the systems and methods described herein include sensors, typically high precision sensors, that can measure parameters and characteristics of the device being manufactured while the process is taking place. For example, in one embodiment, the system includes a precision scanning device that will generate precise measurements of the device being fabricated. In another embodiment, the system includes a laser and camera sensor system. Information collected by the sensor may be used by the device to adjust subsequent steps in the manufacturing process. According to one feature, in-situ monitoring provides quality control by inspecting and tuning the additive and subtractive processes. The feedback from the sensors allows the system to estimate product qualities, such as, for example, tolerances, dimensions, and mass.

According to one aspect, a fabrication system includes a tool-head for manufacturing, a first manipulator, and a second manipulator. The first manipulator supports and manipulates an item, and is configured to provide six-axes of movement for positioning of the item relative the tool-head. The second manipulator carries a component and orients the component at a select orientation relative to the item supported on the first manipulator. The tool-head is configured to add material to at least one of the item and the component. The first and second manipulators provide at least six axes of fabrication for the tool-head.

According to one embodiment, the tool-head is configured to remove material from at least one of the item and the component. In another embodiment, the tool-head is configured to add an adhesive material to at least one of the item and the component. The adhesive material is configured to secure the component to the item. In a further embodiment, the tool-head includes at least one of a fused deposition modeling print head, a milling head, and a robocasting extruder.

According to another embodiment, the fabrication system includes a sensor configured to measure parameters of the item during manufacturing. The sensor may be a high precision sensor. In one example, the sensor includes a laser and camera system configured to generate measurements of the item. In one embodiment, fabrication system includes a processor configured to adjust manufacturing processes in response to the measured parameters. According to another embodiment, the fabrication system includes a processor configured to determine how to move at least one of the first manipulator and the second manipulator. In a further embodiment, the processor is configured to use a hierarchical task network to determine how to manufacture a product using the first manipulator, the second manipulator, and the tool-head. According to one embodiment, the item includes hardware, and the second manipulator is configured to test the hardware.

In one embodiment, the fabrication system includes a software component configured to use a three dimensional model of an end-product to generate a sequence of instructions for movements of at least one of the first manipulator, the second manipulator, and the tool-head. The sequence of instructions may instruct one or more of the first manipulator, the second manipulator, and the tool-head to move in a manner to fabricate the product. In one embodiment, the fabrication system also includes a simulator configured to validate the sequence of instructions.

In another embodiment, the item is a previously printed object that is not in its original form, and the fabrication system includes a software component configured to use a three dimensional model of the item and a three dimensional model of the original form of the previously printed object to generate a sequence of instructions for movements of at least one of the first manipulator, the second manipulator, and the tool-head to return the previously printed object to its original form. According to one example, the fabrication machine may be used to repair a previously printed object that has been damaged.

According to another aspect, a fabrication method includes supporting an item with a first manipulator, manipulating the item, using the first manipulator, along at least one of six axes of movement, to position the item with respect to a tool-head, manipulating a component, using a second manipulator, and orienting the component at a predetermined orientation relative to the item, attaching the component to the item, and adding material to at least one of the item and the component with the tool-head. The first and second manipulators provide at least six axes of fabrication for the tool-head.

According to one embodiment, the method includes removing material from at least one of the item and the component with the tool-head. In another embodiment, the method includes adding an adhesive material, using the tool-head, to at least one of the item and the component, and securing the component to the item. In a further embodiment, the method includes adding a wire to the item. The wire may be added by placing the wire using the second manipulator, or the wire may be added by adding material to the item using the tool-head to create the wire. In one embodiment, the item includes hardware, and the method includes testing the hardware.

According to another embodiment, the fabrication method further includes measuring parameters of the item during fabrication. According to one embodiment, the method includes adjusting, based on the measured parameters, at least one of manipulating the item, manipulating the component, and adding material. In a further embodiment, measuring parameters includes capturing images of the item during fabrication.

In one embodiment, the fabrication method further includes determining how to move at least one of the first manipulator and the second manipulator based at least in part on a finished product design. In one example, determining how to move at least one of the first manipulator and the second manipulator includes using a hierarchical task network to determine how to manufacture a product using the first manipulator, the second manipulator, and the tool-head.

In another embodiment, the fabrication method further includes receiving a three dimensional model of a product, and generating a sequence of instructions for moving at least one of the first manipulator, the second manipulator, and the tool-head to fabricate the product. The fabrication method may also include decomposing the three-dimensional model into a plurality of intermediate parts, and generating the sequence of instructions may include generating an intermediate sequence of instructions for each intermediate part. In one embodiment, the fabrication method includes validating the sequence of instructions with a simulator. In another embodiment, generating a sequence of instructions includes determining at least one parameter of at least one part of the product, and generating instructions for production that do not damage the at least one part of the product.

According to one embodiment, the item is a previously printed object that is not in its original form, and the fabrication method further includes generating a three-dimensional model of the item, receiving a three dimensional model of the original form of the previously printed object, and generating a sequence of instructions for moving at least one of the first manipulator, the second manipulator, and the tool-head to return the previously printed object to its original form. In one example, the fabrication method is used to repair a previously printed object that has been damaged.

### Brief Description of the Figures

The following figures depict certain illustrative embodiments of the present disclosure in which like reference numerals refer to like elements. These depicted embodiments may not be drawn to scale and are to be understood as illustrative of the present disclosure and as not limiting in any way.
Figure 1 shows a fabrication machine, according to an embodiment of the invention;
Figure 2 shows prior art 3D planar surface printing;
Figure 3 shows non-planar surface printing, according to an embodiment of the invention;
Figure 4 is a block diagram showing components of the fabricator machine, according to an embodiment of the invention;
Figure 5 is a flow chart of a fabrication method, according to an embodiment of the invention;
Figure 6 is a flow chart of a dynamic fabrication method, according to an embodiment of the invention;
Figures 7A-7B show fabrication using two manipulators, according to an embodiment of the invention;
Figure 8A-8B show fabrication using two manipulators, according to an embodiment of the invention; and
Figures 9A-9B show fabrication with the use of an adhesive, according to an embodiment of the invention.

### Description

Systems and methods are provided to more fully automate manufacturing and assembly processes, thereby reducing human labor. In one example, a fabrication machine includes a six-axis industrial robotic manipulator and fuses additive and subtractive manufacturing with in-situ component placement to provide completely autonomous all-in-one product manufacturing. The six-axis robotic manipulator (the primary manipulator) positions an item for manufacturing operations (for example, 3D printing, milling and drilling). A secondary manipulator handles component pick-and-place and secondary manufacturing operations such as wire placement and hardware testing. The system may include one or more sensors that can measure parameters and characteristics of the product being manufactured while the process is taking place. For example, in one embodiment, the system includes a precision visual scanning device that will generate precise measurements of the product being fabricated. Information collected by the sensor may be used by the fabrication machine to adjust subsequent steps in the manufacturing process.

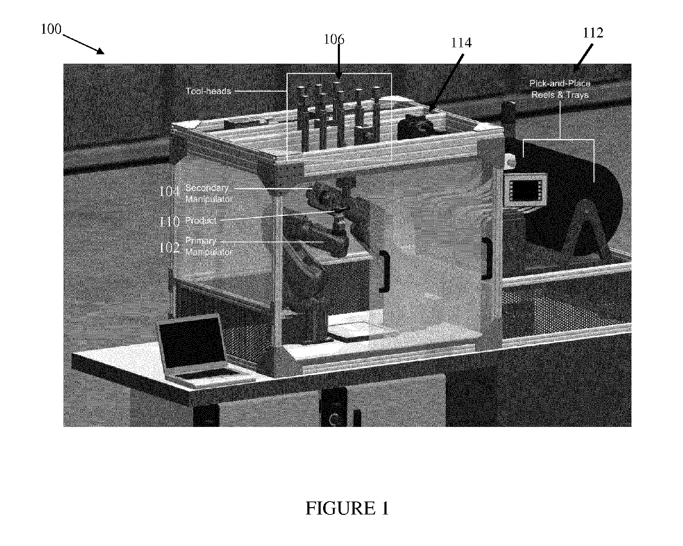

Figure 1 shows a high-level view of a fabrication machine 100, according to one embodiment. The fabrication machine 100 includes a primary manipulator 102, a secondary manipulator 104, and tool-heads 106. The primary manipulator 102 supports and positions an item 110 during fabrication. The primary manipulator 102 is a six-axis industrial robotic manipulator that handles the item 110 from seed item to mature product. The primary manipulator 102 positions the item 110 for manufacturing operations such as additive and subtractive manufacturing. In particular, the primary manipulator 102 orients the item 110 for interaction with the tool-heads 106, which provide additive and subtractive manufacturing mechanisms. The tool-heads 106 may include one or more of a Fused Deposition Modeling (FDM) print head, a milling head, and a robocasting extruder. According to various examples, additive and subtractive manufacturing techniques include 3D printing, milling, and drilling. In one example, a conductive material (or another material) may be added along a specified path instead of adding a wire.

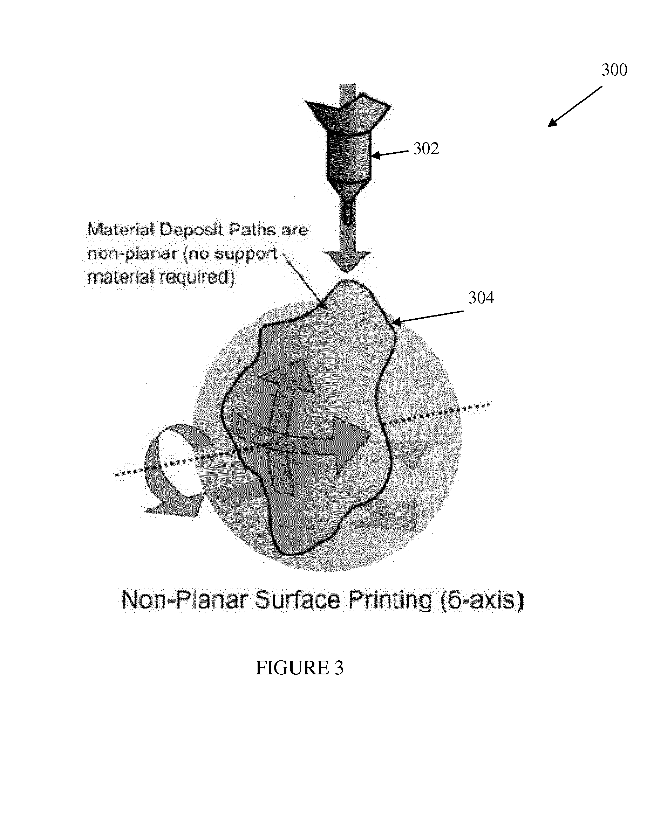

The six axes of manipulation of the item 110 provided by the primary manipulator 102 result in non-planar material deposit paths, and allow for fabrication without the use of a support material, as described in more detail with respect to Figure 3. In one embodiment, the tool-head 106 adds material from one direction (e.g., the z-axis), and the primary manipulator 102 and the secondary manipulator 104 move the item with respect to the tool-head 106, such that the surface of the item that is tooled, or that material is added to or removed from, is approximately orthogonal to the tool-head 106. For example, if the tool-head adds material on top of the item, vertically along the z-axis, the surface to be tooled is positioned in the horizontal x-y plane. In other embodiments, the orientation of one or more of the tool-head 106 and the item 110 may differ.

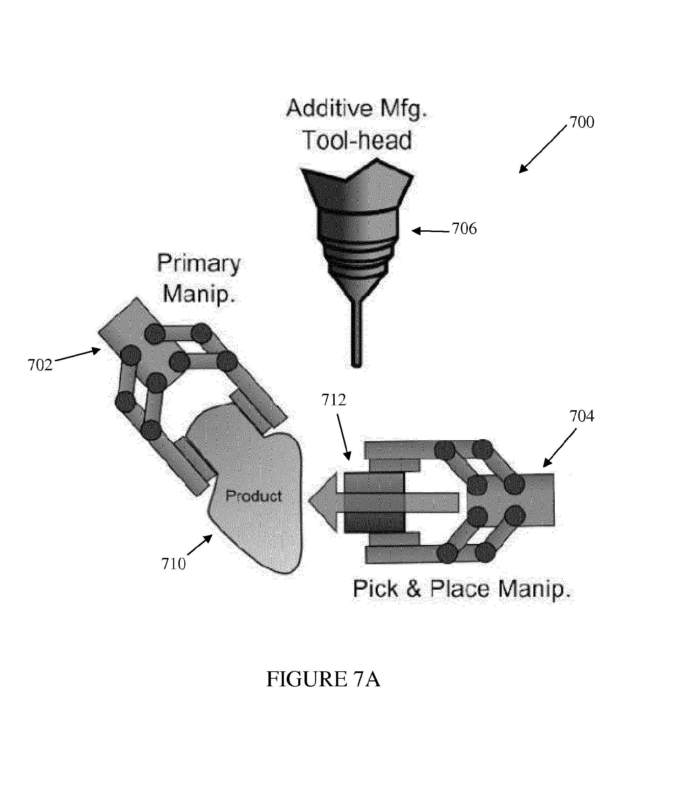

The secondary manipulator 104 may be used for component pick-and-place operations, as well as secondary manufacturing operations such as wire placement and hardware testing. The secondary manipulator 104 may pick components from Pick-and-Place reels and trays 112 and position the components with respect to the item 110 during fabrication. The components may be attached to the product 110, as described in greater detail with respect to Figures 7A-7B, 8A-8B, and 9A-9B. According to one feature, the fabrication machine 100 fuses additive and subtractive manufacturing with in-situ component placement to provide completely autonomous all-in-one product manufacturing.

According to one embodiment, the fabrication machine 100 includes one or more sensors to measure parameters and characteristics of the item 110 while it is being manufactured. One or more of the sensors may be high precision sensors. The sensors may comprise one or more of a machine vision system, a sub-millimeter 2D machine vision system, and 3D machine vision system. In one example, as shown in Figure 1, the fabrication machine 100 may include a planar laser and camera system 114. The laser and camera system 114 generates precise measurements of the item 110 during fabrication. The laser and camera system 114 may be placed in a fixed geometry and the object of interest may be illuminated with the laser and photographed with the camera. The photograph of the laser line may be used to generate three dimensional data. By moving the object through the laser-line plane while generating images, a 3D image of the product can be generated. The laser and camera system 114 can be used to generate a high-resolution 2D image as well as a high resolution 3D image. One example of a laser and camera system is the SICK, Inc. Ranger. In another embodiment, the sensor may include an infrared field and a camera. Information collected by a sensor may be used by the device to adjust subsequent steps in the manufacturing process. Thus, the system can correct or adjust the manufacturing process dynamically. For example, if, during an addition process, an excess of material was deposited, the sensor can detect and model the excess and adjust any subsequent step, whether an additive step or subtractive step, to account for this excess. In particular, subsequent fabrication steps may be adjusted to either apply less material during a subsequent addition process or to remove more material in a subsequent subtraction process.

According to one embodiment, the sensors are used for in-situ monitoring of fabrication. The monitoring provides quality control by inspecting and tuning the additive and subtractive processes. The feedback from the various sensors allows the system to estimate product qualities, such as, for example, tolerances, dimensions, and mass. Tolerances may include temperature tolerances and stress tolerances.

The fabrication machine 100 may include software to process the raw sensor data. Raw sensor data may be compared to an expected state of the fabrication process. According to one embodiment, future fabrication steps may be adjusted based on the sensor data.

In one example, the resolution of the system is about 512x1396 pixels and depth information can be resolved to about 1/16th of a pixel. In other examples, the resolution may differ. Thus, a high accuracy sensor can resolve extremely small features. In one embodiment, a sensor system is placed in a corner of the manufacturing space of the fabrication machine 100. The primary 102 and secondary 104 manipulators may pass components or items past the sensor system for scanning. Information about the scanned components or items may be used to adjust future fabrication steps and may be used for quality control. In one example, software registers the scan to a CAD model of the object at its current state of construction, and the scan is compared to the specification. The CAD model may be generated by a driver of the fabrication machine 100. By comparing the scan to the specification, the conformance of the scan to the specification can be quantified. This provides for detection of placement errors, alignment errors, deposit errors, and other types of non-conformities during construction. In one example, a machine vision system can identify pieces that differ from their specification and should be rejected or reworked. Comparisons to CAD models may be made using a 3D scan, though a 2D scan may also be used.

In one embodiment, non-conformities identified by the sensor system may be documented in a coordinate system that is registered to the object, and the fabrication machine 100 can adapt to correct any identified differences in future productions. According to one feature, this results in a tightly integrated in-process validation system, which is significantly more advanced than an assembly accept/reject check. In one embodiment, sensor data from inspection during the manufacturing process may be archived and linked to an identifier (e.g., RFID tag or 3D barcode) embedded in a product. The sensor data may be used to uniquely identify the object later and may be used for analysis of the object, for example, for a failure analysis.

According to various embodiments, the fabrication machine 100 may be used to manufacture a variety of products. It may be used to fabricate any products currently made using 3D printing process, and it may be used to fabricate a variety of electromechanical devices. Some exemplary products include MP3 players, radios, cell phones, personal digital assistants, tablet computers, toys such as toy cars or helicopters, including remote controlled vehicles, and small ground vehicles, such as surveillance ground vehicles.

### Seed-Centric Fabrication

According to one embodiment, product fabrication by the fabrication machine 100 initiates with the selection of a seed item. The entire product is built on and around the seed item. The item 110 selected as the seed item is arbitrary. In one embodiment, the seed item is defined by the assembly planning software. For example, for fabrication of a cell phone, the seed item may be the battery, the motherboard, or any other item included in the cell phone. In one example, the assembly planning software for fabrication of the cell phone may specify that the seed item is the battery. In one embodiment, the fabrication machine 100 may analyze an object and determine the assembly planning algorithm for fabricating identical items, as described in more detail with respect to Figure 3.

A seed-centric fabrication approach may be compared to the use of a build tray in 3D printing. However, in seed-centric fabrication, such as by the fabrication machine 100, the seed item can be an integral part of the end-product. In 3D printing, the build tray is removed, for example by scraping the product from the tray.

### Non-Planar Printing:

Traditional three-dimensional additive manufacturing technologies (3D-Printers) are planar, generally employing three degrees of freedom (or three axes) X-Y-Z, and building up an object one layer at a time. For example, a typical Fused Deposition Modeling (FDM) printer translates a build tray in the horizontal X-Y plane and as each layer is printed moves the tray downward (or the print head upward) along the Z-axis to begin a new layer. In particular, with traditional 3D-Printers, the object cannot be moved around any of the axes - the object cannot not be automatically rotated around the x-axis, the y-axis, or the z-axis during printing. Using just three axes imposes inherent limitations on how material is deposited and the overall complexity of the 3D-printed part because deposition of material is constrained to the current operating plane.

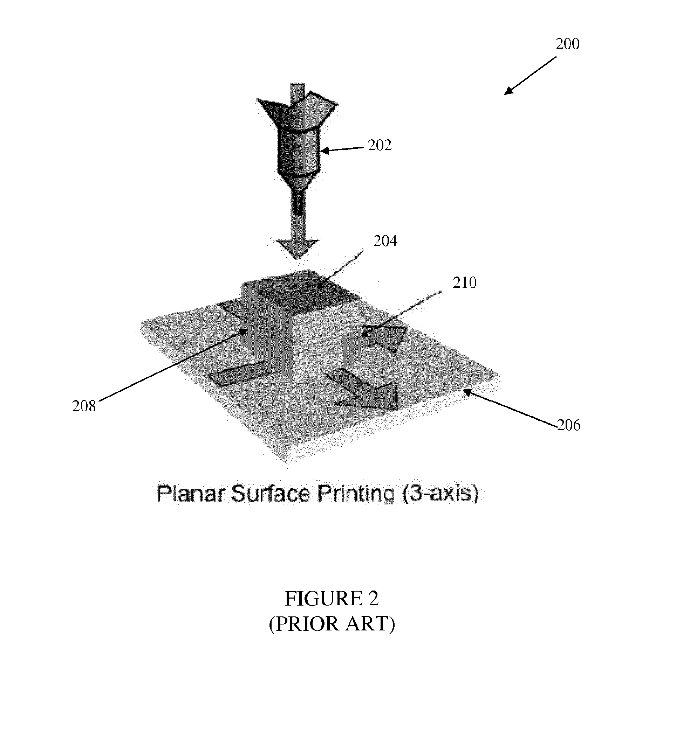

Figure 2 shows planar surface printing (traditional 3D printing) 200. As shown in Figure 2, planar surface printing only allows for deposit of material by the tool-head 202 on to an item 208 at a position on the surface of a single plane 204. Traditional 3D printers use a simple X-Y platform 206 to support the item 208 for fabrication. Additionally, 3D printers generally require a support material 210 in order to add material that overhangs or extends past the underlying surface on the previous plane of the item 208.

Figure 3 shows non-planar surface printing 300, according to one embodiment. Non-planar surface printing 300 allows for arbitrary position and orientation of the item 304, which enables the machine to deposit material at any point on the surface of the item 304 from any direction. A manipulator, such as the primary manipulator 102 shown in Figure 1, can move the item along six different axes, allowing any surface of the item 304 to be positioned under the tool-head 302 for addition (or removal) of material. The fabrication machine 100 increases the number of fabricating axes to six or more axes, enabling the fabrication machine 100 to operate and deposit material and components in arbitrary planes and/or orientations. As shown in Figure 3, the fabricating axes include the x-axis, y-axis, and z-axis, as well as rotation around each of the x-axis, y-axis, and z-axis. Rather than utilizing a simple X-Y platform, the fabricator machine 100 utilizes a six-axis industrial robotic manipulator such as the primary manipulator 102 to provide the additional degrees of freedom.

According to one feature, the fabrication machine 100 can manufacture products without using support materials, since the primary manipulator can position the item 304 in any selected orientation. Thus, the item 304 can be positioned at an angle or on its side such that the surface on which material is added is orthogonal with the tool-head. In general, according to an example, the tool-head adds material from the vertical z-axis and the item is positioned such that the surface to be tooled is approximately horizontal, orthogonal to the tool-head. Thus, objects can be printed without support materials in part because of the six or more axis positioning capability. The positioning capability in combination with the planning algorithms and the additive manufacturing processes together allow for a manufacturing process that does not require support materials yet can print objects having substantially any three-dimensional shape. This is in contrast to traditional 3D printing technologies, which require support material to handle overhangs in three-dimensional geometries, as described above with respect to Figure 2. Eliminating the use of support materials increases efficiency and safety, since using support material requires post-processing of the printed part to remove the supports. The supports are removed either manually, or with a hazardous chemical bath that dissolves the support material. Manual removal of the support is time consuming, while the chemical baths are hazardous. Thus, the use of the fabrication machine 100 for product manufacturing increases manufacturing efficiency and safety.

The planning algorithms used for non-planar printing using, for example, the fabrication machine 100, may include two stages of planning: a first coarse planning stage and a second detailed planning stage. In one example, a Computer Automated Design (CAD) model of a product, such as an electromechanical device, is mapped to assembly instructions in two stages. The first coarse planning stage may include decomposing the design into intermediate structures. The second detailed planning stage may include generating the sequence of instructions for achieving each intermediate structure. The planning algorithm may also include one or more of determining the exact placement of each component on the seed item or product, the order in which each component is placed on the item, how various components are secured, and where material is added, as well as how much material is added. In one embodiment, a driver in the fabrication machine 100 produces an assembly plan for fabricating the end product. The assembly plan may be validated by a simulator, and may be used as an input to a product quality predictor. The product may be passed between the primary manipulator and the secondary manipulator during production, and it may be put down and picked up again.

According to one embodiment, the fabrication machine 100 may be given a completed product design, and it may determine which components and materials will be needed to manufacture the product, how to print or fabricate various parts of the product, and how to assemble the product. In one example, a domain-specific planner is used to decompose a CAD model into intermediate parts. The domain-specific planner may determine an order for the assembly steps, and, in one example, it may schedule the execution of each assembly step. The planner may use a recursive decomposition motif, such as a Hierarchical Task Networks. According to one feature, the motif used by the planner reduces the planning search space by prescribing an acceptable sequence of high-level steps. The motifs may encode domain-specific heuristics in the form of composite process models.

In one example, the planner may use one of three different motifs to create assembly instructions for fabrication of a router that includes a circuit board and a case. In a first motif, the first step is to build a case bottom, then place the circuit board on the case bottom, and then print over the board to complete the case enclosure. In a second motif, the first step is to build a case bottom, then place the circuit board on the case bottom, and then fuse a separately-built case top to the case bottom. In a third motif, the case is printed almost to completion, then the circuit board is placed in the case, and then the case is sealed.

The motif used for a particular product may depend on the components in the product. For example, with respect to the example above, if the temperature of the printing material used to print the case is higher than the temperature the circuit board can withstand, then the first motif, which prints the case enclosure on top of the circuit board, would not be used. Decomposition motifs and information about various components, such as temperature constraints, may be inputs to the planner. According to one embodiment, the planner operates on geometric shapes and includes an interface engine that can compute the intermediate assembly steps and satisfy manufacturing constraints such as printability and heat dissipation.

In one example, the entire product is represented as a grid at multiple resolutions. The grid may be a three dimensional grid or a two dimensional grid. The grid may be used to determine how to decompose the product into multiple components or subtasks. Once the components or subtasks are identified, the fabrication machine 100 determines what orientation the item 110 should be positioned in with respect to a tool-head 106 or the secondary manipulator 104 in order to complete each subtask. For example, the fabrication machine 100 may determine where and how in three-dimensions (in the x-y-z planes), and along the six axes of movement enabled by the primary manipulator 102, the item 110 should be positioned with respect to a tool-head 106 for adding material to create a certain shape, as specified in the grid. The fabrication machine 100 may include one or more processors, which may be used in manufacturing calculations.

The fabrication machine 100 may also be used to print wires by depositing a conductive material along a wire path. In particular, wires maybe printed to connect two or more electrical components. In one embodiment, a path planning algorithm may be used to determine the design path for printing wires. In another embodiment, the product design may specify the wiring layout. In traditional 3D printers, the orientation of the product is determined before printing begins and remains constant until printing is complete. In contrast, the fabrication machine 100 allows the orientation of an object to be changed during printing. Thus, after an initial product orientation is selected, successive positioning and orientation of the object can be selected to optimize fabrication.

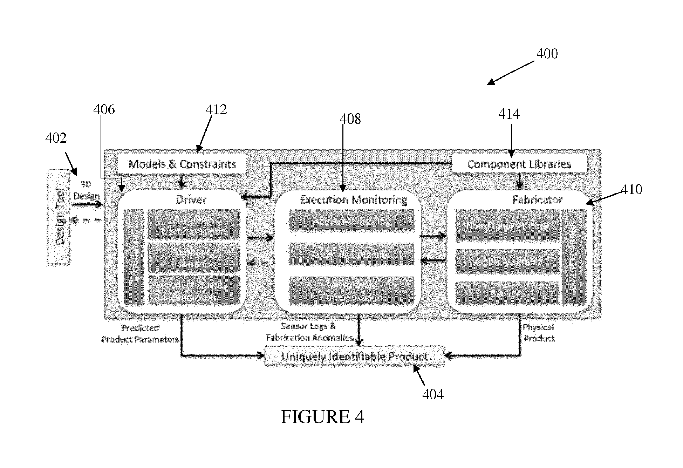

Figure 4 is a block diagram 400 showing components of the fabricator machine 100, according to one embodiment. As shown in Figure 4, the fabricator machine 100 takes as input a 3D design 402, such as a CAD model of an electromechanical design (with electrical components identified), and produces a uniquely identifiable physical product 404 that conforms to the input design. A driver 406 maps the design into executable instructions, predicts several properties of the product, and passes these instructions to the execution monitoring component 408. The driver 406 may decompose the 3D design into intermediate parts. The driver 406 may include a simulator to simulate product fabrication and test various parameters of the simulated product.

The execution monitoring component 408 communicates with the fabricator 410. The instructions to fabricate and test (collect sensor data) are sent to the fabricator 410. The fabricator 410 includes sensors, and sends sensor data to the execution monitoring component 408. Thus, in one embodiment, while the fabricator 410 fabricates the product, it communicates with the execution monitoring component 408, which monitors production. The output is a physical product 404, with an identifier (e.g., RFID tag or 3D barcode) that links the product 404 to the fabrication steps, the product quality estimates, and critical sensor data gathered during the fabrication process.

The dashed arrows in Figure 4 show optional additional capabilities to support a continuous design and fabrication loop. For example, if an anomaly in the fabricated product 404 is detected by the execution monitoring component 408, the execution monitoring component 408 may communicate with the driver 406 to request updated design instructions. Similarly, the driver 406 may communicate with the design tool to request an updated design.

As shown in Figure 4, the architecture of the fabrication machine 100 uses the output of a design tool and produces a uniquely identifiable product 404. The driver 406 generates an assembly plan and the fabricator 410 executes the plan, fabricating the designed object. Execution monitoring by one or more sensors provides real-time quality control.

According to one embodiment, the driver 406 employs Artificial Intelligence (AI) planning techniques and heuristic search to map the 3D design into assembly steps using manufacturing motifs. The driver 406 determines the parts of the product, and determines the order of printing and assembly. A geometry formation component generates an executable fabricator plan, determining what material to deposit, from which angle, and with what thickness. Plans are processed to predict quality and may be verified and visualized in a simulator. According to various embodiments, the driver 406 may be implemented in software, it may be implemented in hardware, or it may include a combination of hardware and software components.

In one embodiment, the fabricator 410 integrates non-planar-printing with in-situ assembly. Non-planar printing is achieved by using a small seed component, held by the six-axis primary manipulator, as an additive manufacturing foundation. In-situ assembly places components such as circuit boards, motors, and batteries into the partially printed product.

According to another embodiment, the execution monitoring component 408 interleaves fabrication and product inspection through collection and analysis of sensor data. The execution monitoring component 408 may use a sub-millimeter 2D computer vision system or a sub-millimeter 3D computer vision system. According to one feature, if sensor data analysis indicates a fabrication anomaly, the execution monitoring component 408 may communicate with the driver 406, and the assembly plan may be adjusted to compensate. According to various embodiments, the execution monitoring component 408 may be implemented in software, it may be implemented in hardware, or it may include a combination of hardware and software components.

As shown in the block diagram 400, the fabrication machine 100 may include a models and constraints component 412, which comprises the manufacturing constraints and motifs that are used in the software driver to produce valid assembly plans. The fabrication machine 100 may also include component libraries 414, which comprise collections of specifications and physical characteristics of components available for in-situ assembly. In one example, the library 414 may include specification and physical characteristics of components used in the electronics industry.

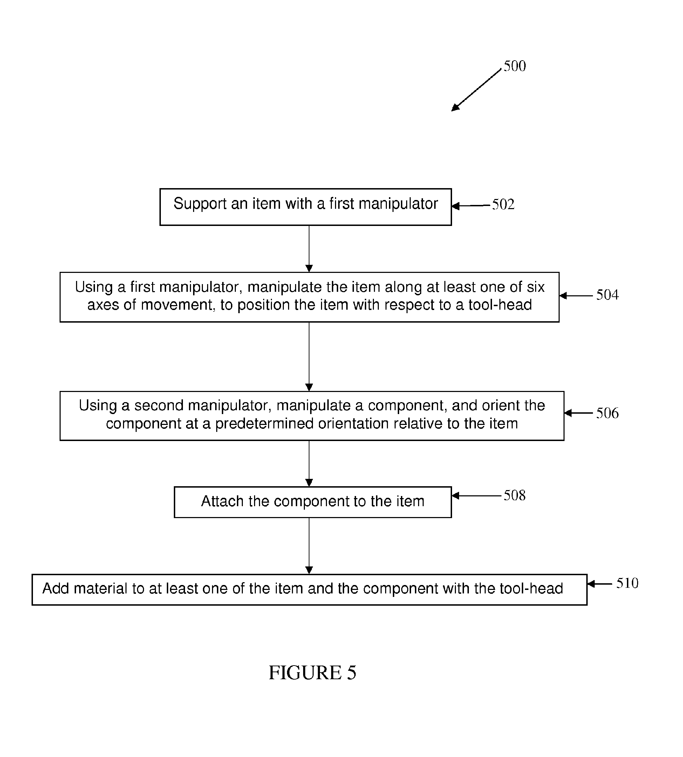

Figure 5 is a flow chart of a fabrication method 500, according to one embodiment. At step 502, an item is supported with a first manipulator. At step 504, the first manipulator manipulates the item along at least one of six axes of movement to position the item with respect to a tool-head. At step 506, a second manipulator manipulates a component, and orients the component at a predetermined orientation relative to the item. At step 508, the component is attached to the item. In one example, the component is fitted to the item and attached. In another example, an adhesive is applied to at least one of the item and the component to secure the item and the component together. At step 510, a tool-head is used to add material to at least one of the item and the component. In one example, the tool-head waits for the added material to dry before adding more material. In another example, the primary manipulator waits for the material to dry before repositioning the item. The time it takes for the material to dry may depend on the material and on the item. In some examples, it takes less than about one second or less than about half a second for the material to dry. In other embodiments, the tool-head may be used to add material to at least one of the item and the component before the component is attached to the item at step 508. Additionally, a tool-head may be used to remove material from at least one of the item and the component.

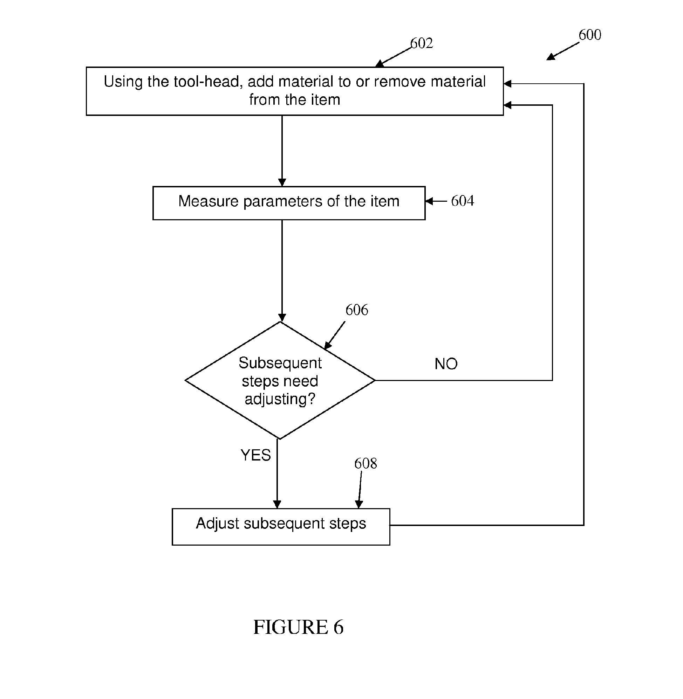

Figure 6 is a flow chart 600 of a part of a dynamic fabrication method, according to one embodiment. At step 602, a tool-head is used to add material to an item or remove material from an item. At step 604, the parameters of the item are measured. In one example, a sensor is used to measure the parameters of the item. At step 606, the measured parameters are used to determine if subsequent steps will be adjusted. If no subsequent steps need to be adjusted, the method returns to step 602. If subsequent steps need to be adjusted based on the measured parameters, then the method proceeds to step 608, and subsequent steps are adjusted. In one example, the subsequent steps may be adjusted by a processor. The dynamic fabrication method may terminate, for example, when product fabrication is complete.

### In-situ Assembly

According to one embodiment, and as described above, the product is fabricated in situ, within the fabrication machine 100, using the initial item 110, the components, and various tool-heads 106. In situ fabrication of the entire product increases efficiency and decreases costs, for example by minimizing the use of human labor. Figures 7A-7B, 8A-8B, and 9A-9B show examples of several component placement operations, which may be configured as fabrication machine 100 settings.

Pick-and-place assembly is widely used in the electronics industry for automated placement of components (integrated circuits, capacitors, resistors, etc.) on printed circuit boards. Traditional pick-and-place machines utilize a robotic manipulator to select a component from one of several component tape-and-reels or trays, translate to the product (a printed circuit board) and place the component on the product. Standardized interfaces and assembly procedures have been developed to accommodate a broad range of devices from a wide variety of device manufacturers.

As described above, the fabrication machine 100 utilizes a pick-and-place manufacturing method with the added capability of operating in six degrees of freedom, allowing for the placement of components in arbitrary locations on the product assembly. To accommodate a wide range of components in a product assembly, several component placement and securing operations are possible.

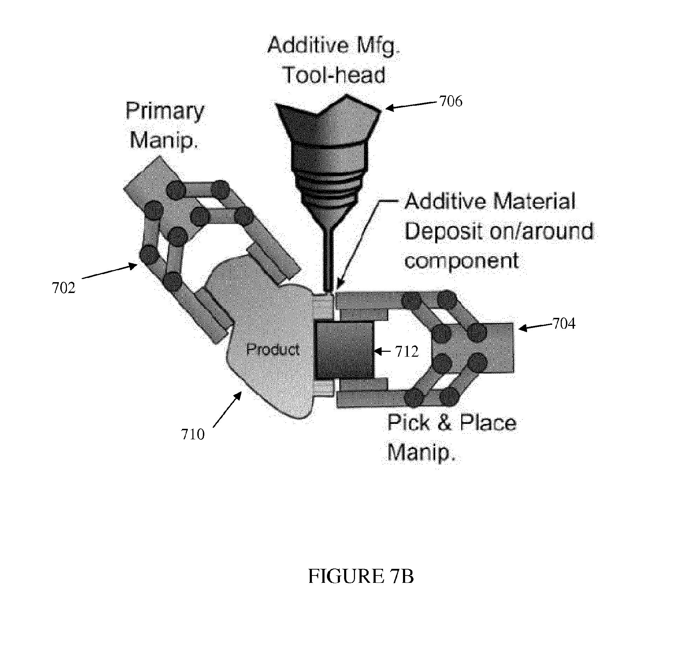

Figures 7A-7B show fabrication using two manipulators and a Synchronous Arm Setting 600, according to one embodiment. As shown in Figure 7A, a primary manipulator 702 holds and positions an item 710. The secondary manipulator 704 holds a component 712. The secondary manipulator 704 synchronizes the position of the component 712 with the position of the item 710, and, as shown in Figure 7B, holds the component 712 firmly in place on the item 710. The secondary manipulator 704 performs the position synchronization and component 712 placement operations regardless of the orientation of the item 710. One or more additive manufacturing tool-heads 706 adds material to at least one of the item 710 and the component 712 to build a support structure on and/or around the component 712 and securely lock the component 712 in place on the item 710. According to one feature, the component placement operation shown in Figures 7A and 7B may be used for operations that involve larger and/or complex components.

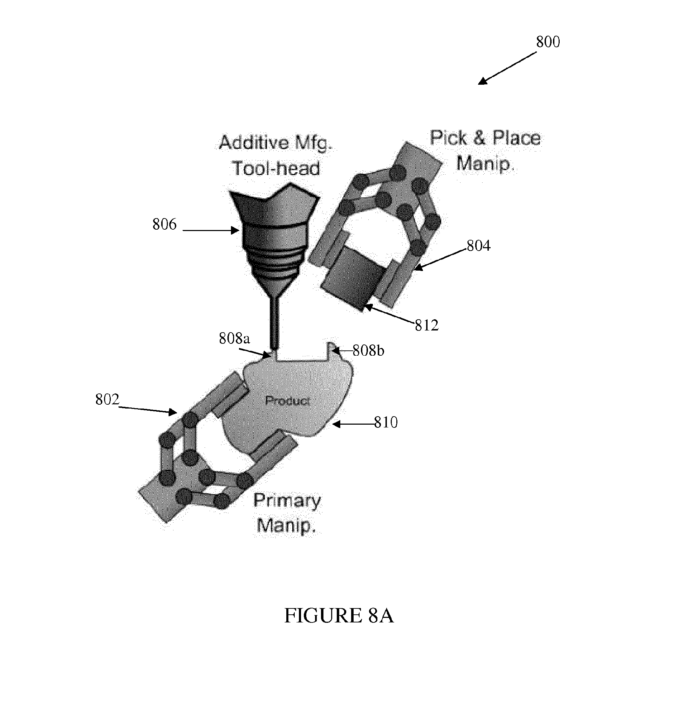

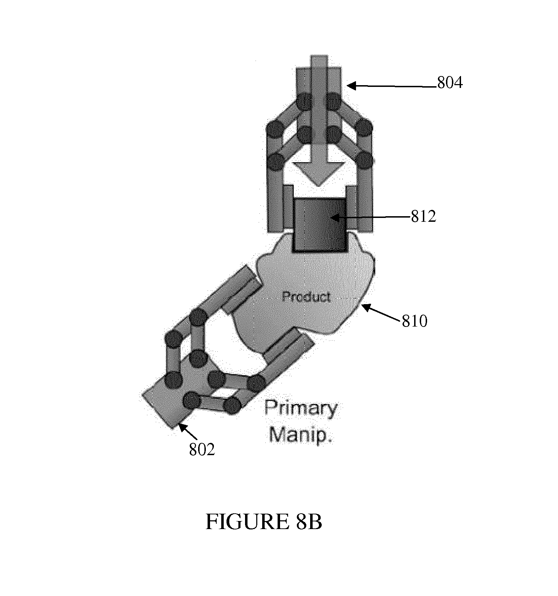

Figures 8A-8B show fabrication using two manipulators and a Support Structure Setting 700, according to one embodiment. As shown in Figure 8A, a support structures 808a, 808b are added to the item 810 before the component 812 is placed on the item 810. In particular, the primary manipulator 802 holds the item 810 in place while the tool-head 806 adds material to the item 810, building the support structures 808a, 808b. According to one embodiment, the support structures 808a, 808b are configured to hold the component 812 in place on the item 810 using a friction constraint. After the support structures 808a, 808b are added to the item 810, the secondary manipulator 804 places the component 812 on the item 810, in the position created by the support structures 808a, 808b, as shown in Figure 8B. The component 812 may be firmly held in place on the item 810 by friction, and may be embedded on the item 810 with additional material deposits. In one example, the support structures 808a, 808b form a single, connected support structure, and the illustration in Figures 8A and 8B shows a cross-section of the support structure.

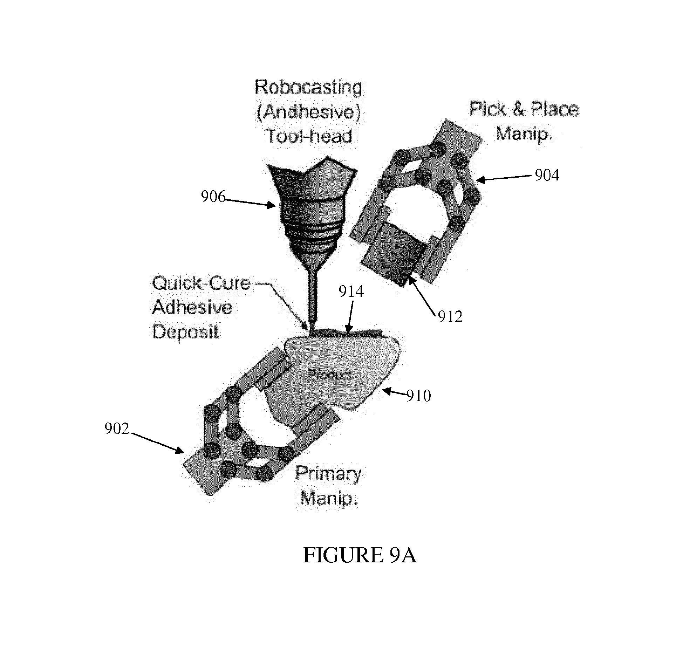

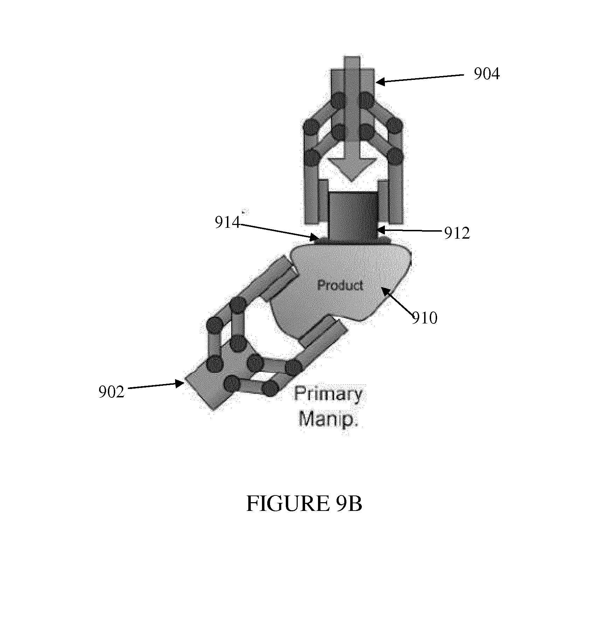

Figures 9A-9B show the use of an adhesive 914 during fabrication to secure the component 912 to the item 910, according to one embodiment. The primary manipulator 902 positions the item 910 with respect to the tool-head 906 for application of the adhesive 914 to the surface of the item 910 on which the component 912 is to be attached. The primary manipulator 902 may move the item 910 for even application of the adhesive 914 to the surface area. After application of the adhesive 914 to the item 910, the secondary manipulator 904 places the component 912 on the item 910. The adhesive 914 holds the component 912 firmly in place on the item 910, and additional material deposits may be used to embed the component 912 on the item 910.

In various examples, components that may be added to an item include processors, motherboards, batteries, displays, memory drives, wires, buttons, and user interfaces. In some instances, the components may be pre-manufactured, and then secured to the item or product. In other instances, one or more tool-heads may be used to add various pre-selected materials to the item to create the components directly on the item. For example, instead of placing a wire on an item, a tool-head may be used to add a line of conductive material. Similarly, insulating materials may be added to the item. In other examples, any type of material may be added to the item during fabrication. The materials may include, for example, one or more of thermoplastics, urethanes, urethane rubbers, silicones, ceramics, stainless steel, aluminum, and titanium.

### Example Manufacturing and Tooling Heads

The fabrication machine 100 includes one or more tool-heads 106. According to one embodiment, a sufficient number of tool-heads 106 may be included in the fabrication machine 100 such that all tooling of the item 110 occurs within the workspace of the primary manipulator 102 of the fabrication machine 100. Many of the fabrication methods of the fabrication machine 100 generally involve the use of additive manufacturing technologies. According to one feature, the fabrication system 100 can support several additive manufacturing technologies.

Some examples of additive manufacturing technologies that may be included in the fabrication machine 100 are Fused Deposition Modeling (FDM), Robocasting, Laser Engineered Net Shaping (LENS),Milling/drilling machines, selective laser sintering, stereolithography, laminated object manufacturing, and electron beam melting. According to one example, FDM is a process in which thermoplastics are liquefied and deposited via an extrusion nozzle. Robocasting may be similar in methodology to FDM. In one example, robocasting uses a syringe-like nozzle to dispense non-molten semi-liquid materials, such as urethanes, silicone, or ceramics. Depending on the semi-liquid material used, the material either cures using additional operations (such as UV or heat) or is dispensed during the curing stage (for example, 2 part silicone or urethane rubber). In another example, using LENS, additional materials are deposited at high resolution. The materials may include, for example, one or more of stainless steel, aluminum, and titanium. In a further example, milling/drilling machines having five or more axes of movement may be used for additive or subtractive manufacturing. In a further example, selective laser sintering uses one or more high power lasers to fuse small particles of plastic or metal together, and may be used to create parts out of, for example, ceramic or titanium. In another example, stereolithography uses a light curing resin and a low power laser to create a resin based part. According to another example, laminated object manufacturing uses layers of paper and a cutting laser. In a further example, electron beam melting uses an electron beam and metal powder to create a part by fusing the thin layers of melted metal powder together.

Subtractive manufacturing or machining may be used to remove material from a product. In some examples of subtractive manufacturing, drilling tool-heads provide precision holes, tapping tool-heads provide threading for fasteners, and milling tool-heads provide high precision surface finish. The use of subtractive manufacturing in conjunction with additive manufacturing increases the types of artifacts that can be fabricated. Additionally, subtractive manufacturing can be used to add fasteners.

Although fasteners can be eliminated by using the fabrication machine 100, fasteners may be useful for component replacement or servicing by the end user (for example, a battery hatch). In one embodiment, a specialized manipulator may be used to handle the selection and insertion of a wide range of fasteners into threaded holes created by subtractive manufacturing.

In one embodiment, the fabrication machine 100 is used to add wires or cables to a product, and the fabrication machine 100 includes sensors for detecting electrical anomalies in wiring or printed wires. Sensors may also be used to analyze the conductivity of wires or cables. The fabrication machine 100 may include tool-heads designed to prepare and cut wires or cables.

### Example Uses

According to one embodiment, the fabrication machine 100 may be used in a Manufacturing Distribution Facility, and it may use the product of the facility as components in the final product. For example, a facility may manufacture net shape metal parts or circuit boards, which may be input components for products fabricated with the fabrication machine 100.

According to another embodiment, the fabrication machine 100 may be used by individuals to create new products that overcome limitations of existing products. The fabrication machine 100 may be used by the military in the field. In one example, a soldier in the field may use the fabrication machine 100 to modify a surveillance robot. For example, if the surveillance robot is unable to climb over obstacles in the field, the soldier may use the fabrication machine 100 to create and fabricate a new design. In another example, an offsite military personnel may redesign the surveillance robot and transmit the new design to the soldier in the field. The soldier could use the fabrication machine 100 to easily fabricate a new surveillance machine with minimal product fabrication knowledge. In general, the fabrication machine 100 improves manufacturing capabilities and innovation by increasing access to 3D printing while also reducing costs and required production skills.

In another example, the fabrication machine 100 may be used to repair a product. The manipulators may position the product such that the sensor system can scan the product and determine the product identifier (for example, an RFID, or 3D barcode). The product identifies may be used to obtain the original design and parameters of the design. The fabrication machine 100 can compare the current state of the design with the intended final state, and create a fabrication plan using the existing structure as the seed. For instance, if a toy helicopter had a damaged tail, the tail may be removed and the fabrication system 100 can recognize the design, determine what is missing, and re-fabricate the tail. Note that the damaged tail may be removed by the fabrication machine 100 using subtractive processing or it may be manually removed. In one embodiment, the fabrication machine 100 may be used to remove damaged or obsolete design elements autonomously.

Those of skill in the art of manufacturing will understand that the systems and methods described above can be applied to different processes and can be modified and supplemented to address as is appropriate for a particular application. The processes described above, including FDM and Robocasting, will allow for products composed of numerous materials, including but not limited to ABS, polycarbonate, silicone rubbers, urethane rubbers, and plastics, and low melting temperature metals (e.g., for conductive traces), as well as combinations of these materials. However, those of skill in the art will recognize that other materials can be used and the materials and combination of materials used will depend upon the application.

## Claims

1. A fabrication system, comprising
a tool-head for manufacturing,
a first manipulator for supporting and manipulating an item, configured to provide
six-axes of movement for positioning of the item relative the tool-head, and
a second manipulator for carrying a component and for orienting the component at a
select orientation relative to the item supported on the first manipulator,
wherein the tool-head is configured to add material to at least one of the item and the
component, and
wherein the first and second manipulators provide at least six axes of fabrication for
the tool-head.

2. The fabrication system of claim 1, wherein the tool-head is configured to remove material from at least one of the item and the component.

3. The fabrication system of claim 1, wherein the tool-head is configured to add an adhesive material to at least one of the item and the component and the adhesive material is configured to secure the component to the item.

4. The fabrication system of claim 1, further comprising a sensor configured to measure parameters of the item during manufacturing.

5. The fabrication system of claim 4, wherein the sensor includes a laser and camera system configured to generate measurements of the item.

6. The fabrication system of claim 4, further comprising a processor configured to adjust manufacturing processes in response to the measured parameters.

7. The fabrication system of claim 1, wherein the item includes hardware, and the second manipulator is configured to test the hardware.

8. The fabrication system of claim 1, wherein the tool-head includes at least one of a fused deposition modeling print head, a milling head, and a robocasting extruder.

9. The fabrication system of claim 1, further comprising a processor configured to determine how to move at least one of the first manipulator and the second manipulator.

10. The fabrication system of claim 9, wherein the processor is configured to use a hierarchical task network to determine how to manufacture a product using the first manipulator, the second manipulator, and the tool-head.

11. The fabrication system of claim 1, further comprising a software component configured to use a three dimensional model of an end-product to generate a sequence of instructions for movements of at least one of the first manipulator, the second manipulator, and the tool-head.

12. The fabrication system of claim 11, further comprising a simulator configured to validate the sequence of instructions.

13. The fabrication system of claim 1, wherein the item is a previously printed object that is not in its original form, and further comprising a software component configured to use a three dimensional model of the item and a three dimensional model of the original form of the previously printed object to generate a sequence of instructions for movements of at least one of the first manipulator, the second manipulator, and the tool-head to return the previously printed object to its original form.

14. A fabrication method, comprising
supporting an item with a first manipulator,
manipulating the item, using the first manipulator, along at least one of six axes of
movement, to position the item with respect to a tool-head,
manipulating a component, using a second manipulator, and orienting the component
at a predetermined orientation relative to the item,
attaching the component to the item, and
adding material to at least one of the item and the component with the tool-head, wherein the first and second manipulators provide at least six axes of fabrication for
the tool-head.

15. The fabrication method of claim 14, further comprising removing material from at least one of the item and the component with the tool-head.

16. The fabrication method of claim 14, further comprising:
adding an adhesive material, using the tool-head, to at least one of the item and the component, and
securing the component to the item.

17. The fabrication method of claim 14, further comprising measuring parameters of the item during fabrication.

18. The fabrication method of claim 17, further comprising adjusting, based on the measured parameters, at least one of manipulating the item, manipulating the component, and adding material.

19. The fabrication method of claim 17, wherein measuring parameters includes capturing images of the item during fabrication.

20. The fabrication method of claim 14, further comprising adding a wire to the item by one of placing the wire using the second manipulator and adding material using the tool-head to create the wire.

21. The fabrication method of claim 14, wherein the item includes hardware, and further comprising testing the hardware.

22. The fabrication method of claim 14, further comprising determining how to move at least one of the first manipulator and the second manipulator based at least in part on a finished product design.

23. The fabrication method of claim 22, wherein determining how to move at least one of the first manipulator and the second manipulator includes using a hierarchical task network to determine how to manufacture a product using the first manipulator, the second manipulator, and the tool-head.

24. The fabrication method of claim 14, further comprising:
receiving a three dimensional model of a product, and
generating a sequence of instructions for moving at least one of the first manipulator, the second manipulator, and the tool-head to fabricate the product.

25. The fabrication method of claim 24, further comprising decomposing the three-dimensional model into a plurality of intermediate parts, and wherein generating the sequence of instructions includes generating an intermediate sequence of instructions for each intermediate part.

26. The fabrication method of claim 24, further comprising validating the sequence of instructions with a simulator.

27. The fabrication method of claim 24, wherein generating a sequence of instructions includes determining at least one parameter of at least one part of the product, and generating instructions for production that do not damage the at least one part of the product.

28. The fabrication method of claim 14, wherein the item is a previously printed object that is not in its original form, and further comprising:
generating a three-dimensional model of the item,
receiving a three dimensional model of the original form of the previously printed object, and
generating a sequence of instructions for moving at least one of the first manipulator, the second manipulator, and the tool-head to return the previously printed object to its original form.
